# FASCICULE DE BREVET EUROPEEN

(11) **EP 0 496 688 B1**
(45) Date de publication et mention de la délivrance du brevet: **12.04.1995**
(21) Numéro de dépôt: 92440008.8
(22) Date de dépôt: 22.01.1992
(51) Int. Cl.: A47J 31/06

(54) **Interface d'étanchéité pour unité de lixiviation dans les machines de préparation du café dit "expresso"**
Dichtung für eine Auslaugeinheit zum Bereiten von Espresso-Kaffee
Sealing interface for an extracting unit for preparing espresso coffee

(30) Priorité: 22.01.1991 FR 9100839
(43) Date de publication de la demande: 29.07.1992
(73) Titulaire: RENEKA INDUSTRIES S.A., F-67120 Molsheim (FR)
(72) Inventeur: Zanin, Yvano, F-67120 Molsheim (FR)
(74) Mandataire: Metz, Paul

(56) Documents cités:
- DE-B- 1 077 843
- DE-C- 517 607
- FR-A- 2 286 627
- FR-A- 2 577 405
- FR-E- 64 092
- US-A- 3 218 956

## Description

La présente invention se rapporte à une interface d'étanchéité entre la coupe et la sortie du distributeur dans les machines de préparation du café dit "expresso". Une interface d'étanchéité selon le préambule de la revendication 1 est connu du document FR-A-2 577 405.

Il s'agit plus particulièrement des machines de préparation dans lesquelles une quantité dosée de café moulu est introduite dans une coupelle cylindrique à fond conformé en grille servant de passoire.

Classiquement, cette coupelle est appelée passoire.

La passoire est calée et immobilisée de façon amovible dans un support appelé coupe formé d'une cavité réceptrice recevant la passoire prolongée latéralement par une poignée. La cavité est pourvue d'une sortie basse généralement divisée en un ou plusieurs becs verseurs dont l'entraxe permet de remplir une ou plusieurs tasses juxtaposées. Des ergots diamétralement opposés font saillie de la surface latérale au niveau du bord supérieur de la coupe contenant la passoire.

Ces ergots sont destinés à coopérer avec des encoches prévues dans le porte-coupe à la sortie du groupe d'injection pour la prise mécanique d'assemblage et de mise en position de la coupe et du distributeur.

La sortie du distributeur comporte dans la partie centrale où débouche le conduit de sortie de l'eau chaude sous pression un tamis circulaire de diamètre sensiblement égal à celui de la coupe, entouré d'un joint annulaire périphérique en général plat.

Lors de la mise en place du support de passoire ou coupe supportant la passoire chargée d'une dose de café moulu, l'utilisateur engage les ergots dans les encoches, et par la poignée, fait tourner la coupe sur elle-même. Les ergots se déplacent le long de rampes inclinées jusqu'au blocage-serrage de la coupe, de manière à réaliser l'étanchéité par appui mécanique du bord supérieur de la passoire sur le joint annulaire plat.

L'étanchéité entre la coupe et la sortie du distributeur dépend directement de la pression d'appui sur le joint, donc de la déviation angulaire de la poignée, ainsi que de la planéité du bord supérieur de la passoire.

Après de multiples utilisations, notamment sur les machines professionnelles, il se produit inévitablement :
. un encrassement du joint ;
. une usure du joint ;
. une usure des parties métalliques, ergot et encoches ;
. une déformation du bord plan supérieur de la passoire résultant des chocs répétés pratiqués par les utilisateurs professionnels contre, par exemple, un morceau de bois pour permettre la sortie du marc de café de la coupe après usage.

Ces encrassements, usures et déformations provoquent d'abord une augmentation progressive de l'angle de serrage entre le distributeur et le manche pour rattraper l'usure du joint, manche qui ne conservera donc pas, dans le temps, une direction fixe en position de blocage.

Se produira ensuite un défaut d'étanchéité difficilement réparable sans remplacement du joint.

Ceci s'avère particulièrement gênant sur les machines à postes multiples, car l'augmentation de l'angle de serrage se traduit rapidement par le rapprochement des poignées voisines jusqu'à leur croisement lors de la mise en place ou de la sortie de deux coupes voisines, croisement difficilement compatible avec un maniement rapide et commode en usage professionnel.

La présente invention a pour but de remédier notamment aux inconvénients précités, et se rapporte à une conformation entièrement nouvelle d'étanchéité entre la passoire contenant le café moulu et la sortie du distributeur.

Un premier but de l'invention consiste à conserver un angle de manoeuvre constant correspondant à une position d'arrêt invariable de la poignée.

Un autre but de l'invention consiste à ne plus utiliser le bord plan supérieur de la passoire pour réaliser l'étanchéité, car celui-ci, subissant des déformations consécutives aux chocs répétés utilisés pour l'éjection de l'agglomérat de marc, ne constitue plus la surface de contact d'étanchéité contre le joint.

L'idée générale inventive comme exprimée dans la partie caractérisante de la revendication 1 consiste à utiliser un joint d'étanchéité différent travaillant en compression à la manière d'un joint annulaire coulissant.

A cet effet, on prévoit d'une part de loger le joint, qui affecte par exemple une forme torique, dans une gorge périphérique annulaire présente sur la saillie de la sortie du distributeur, gorge présentant un profil en rampe conique qui diverge vers le haut et dont les dimensions permettent, sous l'effet de la pression de l'eau, le déplacement du joint vers le haut, c'est-à-dire vers la partie de plus grand diamètre en vue d'une augmentation du diamètre annulaire du joint.

On prévoit d'autre part, sur la pièce réceptrice du distributeur, trois entailles ou encoches équidistantes à rampes obliques montantes et à butée de fin de course avec zone d'entrée vers le bas. Les trois ergots inclinés en saillie, conformés sur la périphérie de la coupe, sont destinés à coopérer avec les trois encoches pour la prise mécanique d'assemblage suivie d'un déplacement de la coupe vers le haut lors de la manoeuvre de mise en place puis d'un arrêt en butée correspondant à une position prédéterminée de la poignée. D'autres caractéristiques sont contenues dans les revendications dépendantes 2-10.

Parmi les avantages de cette conformation nouvelle, on peut citer principalement :
. l'existence d'une butée limitant le déplacement angulaire de la poignée associée à la coupe ;
. l'angle de manoeuvre constant ;
. la légère rotation du joint sur lui-même lors de la manoeuvre, lui évitant ainsi l'encrassement ;
. l'utilisation nouvelle du joint qui travaille à coulissement sur la surface supérieure intérieure de la passoire ;
. l'utilisation de la pression de l'eau chaude pour appliquer le joint contre la surface latérale intérieure de la passoire ;
. l'amélioration du guidage et de l'étanchéité ;
. le changement aisé du joint sans outil et sans démontage d'autres pièces ;
. l'absence de réglage de rattrapage du jeu ;
. l'angle de manoeuvre plus court ;
. le tassement du café et non du joint ;
. le moindre effort nécessaire pour la manoeuvre de la coupe en blocage et en déblocage.

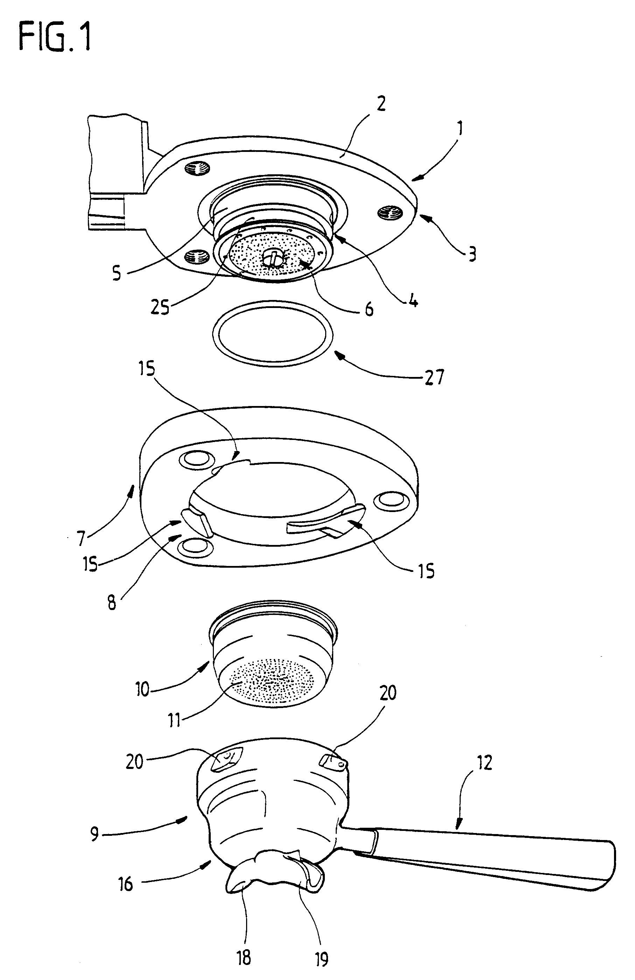

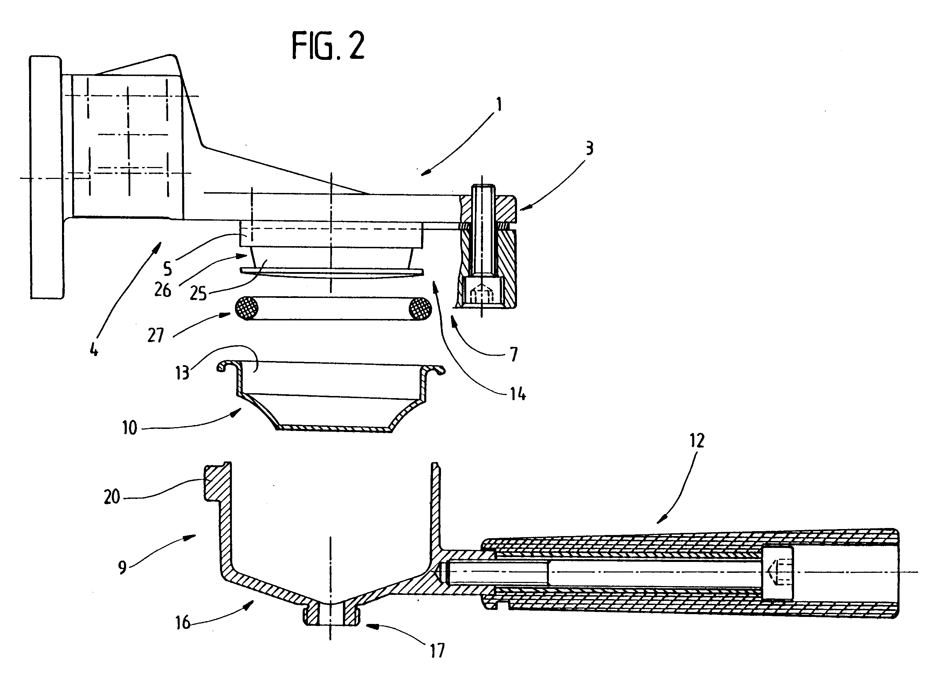

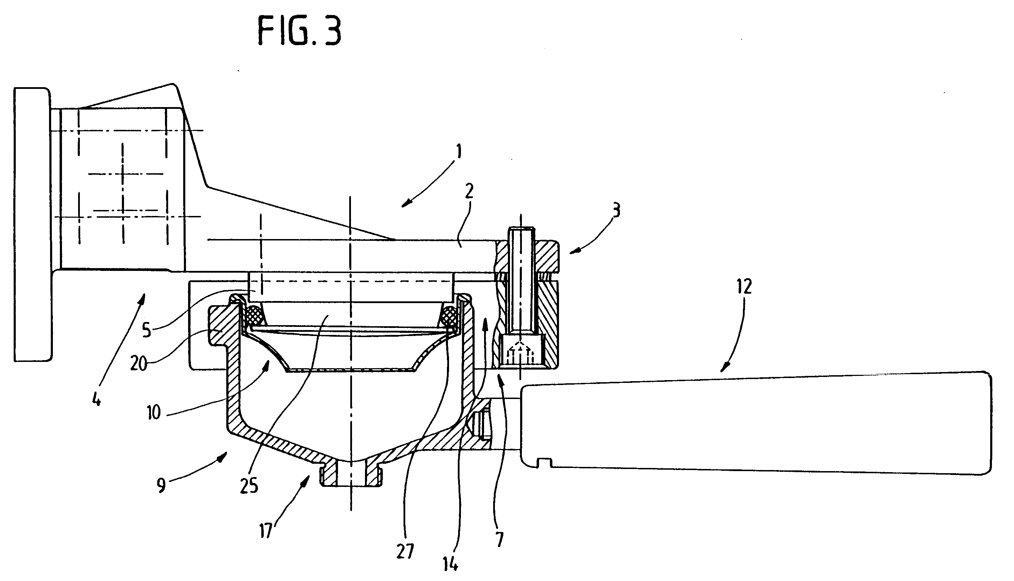

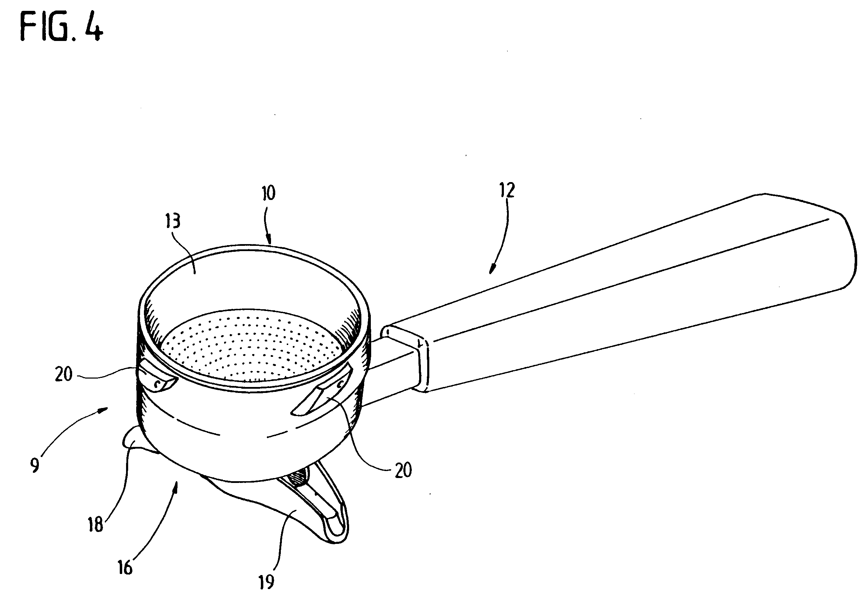

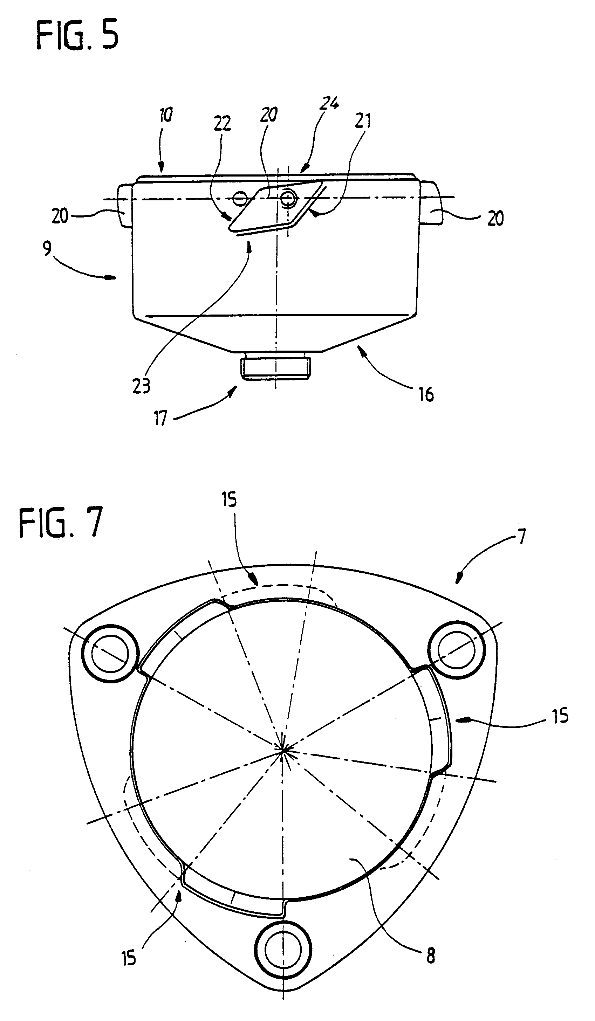

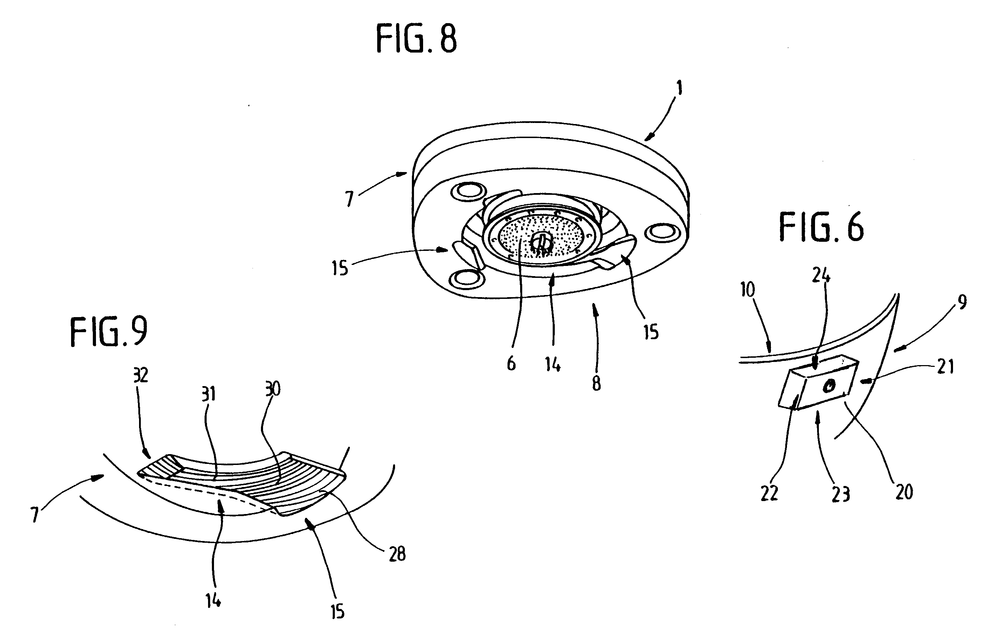

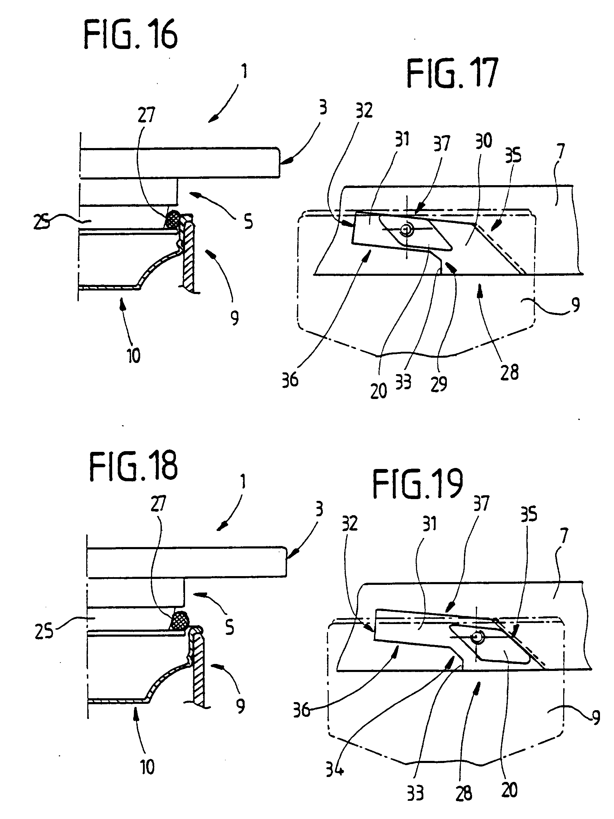

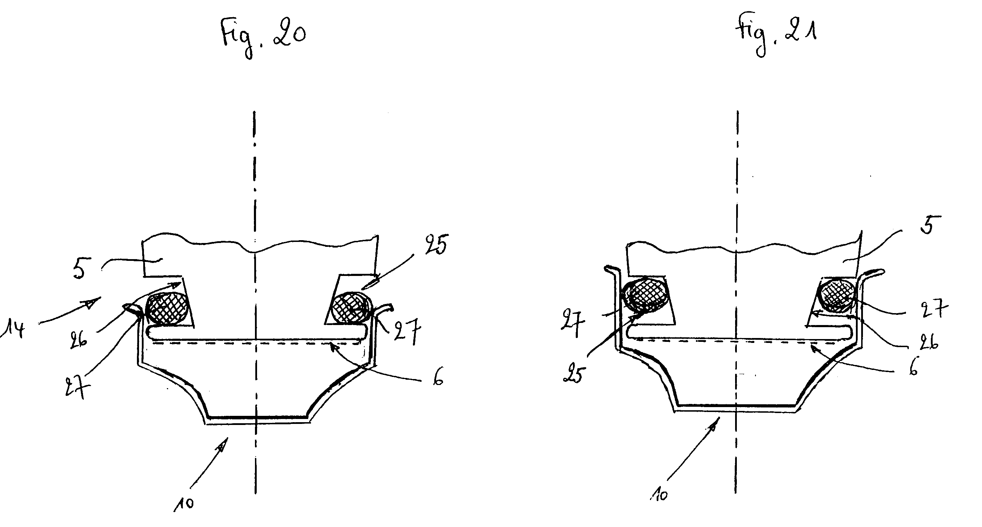

On comprendra mieux l'invention et ses avantages à l'aide de la description ci-après d'un mode de réalisation préféré non limitatif et des figures annexées suivantes :
. la figure 1 est une vue en perspective dite "en éclaté", montrant la constitution de l'ensemble d'étanchéité selon l'invention avec passoire de grande contenance ;
. la figure 2 est une vue en coupe verticale de l'ensemble d'étanchéité montrant les différents éléments à l'état dissocié avec passoire de petite contenance ;
. la figure 3 est une vue en coupe verticale des différents éléments en place sur le distributeur ;
. la figure 4 est une vue en perspective du support amovible ;
. la figure 5 est une vue en élévation de la partie frontale du support amovible ;
. la figure 6 est une vue de détail d'un ergot ;
. la figure 7 est une vue en plan de la pièce porte-coupe ;
. la figure 8 est une vue en perspective de la périphérie intérieure réceptrice du distributeur ;
. la figure 9 est une vue agrandie d'une structure réceptrice ;
. les figures de 10 à 19 sont des schémas successifs explicatifs en demi-coupe puis en élévation de l'ensemble d'étanchéité puis de l'ergot dans l'encoche lors des principales phases d'assemblage et de dégagement ;
. les figures 20 et 21 sont des vues schématiques en coupe au niveau de la gorge illustrant le travail du joint lors de l'assemblage :
   - figure 20 : joint en position basse à l'engagement,
   - figure 21 : joint en position haute d'étanchéité.

L'invention procède de l'idée générale inventive qui consiste à modifier la conformation de l'interface distributeur-coupe et à utiliser un joint annulaire mobile monté à un emplacement lui permettant de porter sur une autre surface et de travailler différemment en relation avec son déplacement dans les machines de préparation du café dit "expresso".

Plus particulièrement, on prévoit d'une part de loger le joint, par exemple sous forme torique, dans une gorge périphérique annulaire présente sur la saillie de la sortie du distributeur, gorge présentant un profil en rampe conique qui diverge vers le haut et dont les dimensions permettent, sous l'effet de la pression de l'eau et de la montée de la passoire, le déplacement du joint vers le haut, c'est-à-dire vers la partie de plus grand diamètre de la gorge en vue d'une augmentation du diamètre annulaire du joint.

Classiquement, l'ensemble de distribution de l'eau chaude et de formation du café liquide se compose des organes et éléments généraux suivants.

Chaque poste délivrant du café liquide comprend un distributeur 1 d'eau chaude comportant un corps sous la forme d'un support 2 à face plane horizontale 3 de laquelle émerge la tête d'un bloc de distribution 4 à saillie centrale 5 terminée par un rebord inférieur, saillie par laquelle est délivrée l'eau chaude à travers une grille de diffusion 6.

Sur le corps du distributeur 1 est fixée, par exemple par trois vis, une pièce mécanique monobloc appelée porte-coupe 7, à cavité centrale 8 destinée à recevoir par un assemblage dissociable à butée un ensemble amovible de lixiviation appelé traditionnellement coupe 9, comprenant un support de réceptacle portant un réceptacle amovible appelé passoire 10 sous la forme d'un godet ou d'une coupelle à fond muni d'une ou conformée selon une grille 11, support de réceptacle prolongé par une poignée 12 pour sa préhension, sa mise en place, sa fixation sur le bloc de distribution 4 et sa manoeuvre en butée ou en ouverture.

La passoire 10 affecte la forme d'une coupelle ou d'un godet dont la partie supérieure 13 de la surface latérale intérieure constitue une zone d'application du joint annulaire d'étanchéité. Elle passe à un intervalle faible du rebord inférieur de la saillie 5 offrant une communication pour l'eau.

Le porte-coupe 7 entoure la saillie centrale 5 du bloc de distribution 4 et est centré sur celle-ci, ménageant entre sa surface latérale intérieure et la saillie centrale 5 un espace annulaire d'assemblage 14 dans lequel existent et coopèrent des structures complémentaires d'assemblage-dissociation en deux temps avec butée. Ces structures comprennent un moyen d'engagement et de retrait et un moyen de guidage en rotation lors de l'assemblage ou de la dissociation par rotation de la coupe sur elle-même dans le porte-coupe jusqu'en butée. Au cours de ce mouvement d'assemblage, le joint, sous l'effet de la montée de la passoire, se déplace d'une position basse de repos jusqu'à une position haute d'étanchéité en augmentant de diamètre annulaire.

A cet effet, dans sa surface latérale intérieure sont conformées des encoches telles que 15 disposées angulairement équidistantes.

Plus particulièrement, le corps de la coupe 9 présente d'une part un fond 16 formé d'une sortie centrale, d'un écoulement 17 pour le café à un ou plusieurs becs verseurs, par exemple deux 18 et 19, et d'autre part un logement pour la passoire intérieure amovible 10. Sur sa surface latérale et à proximité du bord haut du corps de la coupe 9 sont disposés des ergots tels que 20 en saillie vers l'extérieur, en nombre et disposition identiques à ceux des encoches 15 du porte-coupe 7 que l'on décrira ci-après en détail. Ces ergots affectent chacun une forme générale en losange et sont disposés légèrement inclinés par rapport au plan supérieur d'ouverture de la coupe.

L'épaisseur des ergots 20 est suffisante pour constituer par chacun de leurs chants une base d'appui, de contact et de glissement le long des bords latéraux correspondants des encoches en vue d'un assemblage à dissociation en deux temps avec butée.

On distingue ainsi une base oblique avant 21 et une base oblique arrière 22 ainsi qu'une base inférieure 23 et une base supérieure 24 constituant autant de surfaces de contact et de glissement avec les bords des encoches 15.

La saillie centrale 5 du distributeur 1 présente une gorge périphérique annulaire 25 de profil en rampe conique 26 garnie d'un joint d'étanchéité annulaire 27 expansible c'est-à-dire élastique, de préférence, mais non nécessairement, de forme torique.

La largeur de cette gorge est supérieure à la plus grande dimension de section du joint d'étanchéité annulaire 27 pour lui permettre un débattement de bas en haut et inversement le long du fond de cette gorge. La profondeur de la gorge lui est inférieure de façon qu'il dépasse de la gorge pour venir porter contre la surface latérale de la partie supérieure 13 en regard de la passoire 10.

En revanche, l'augmentation du diamètre annulaire de la gorge 25 vers le haut en raison de son profil conique divergent vers le haut permet, par la manoeuvre de mise en place de la coupe, au joint torique de se déplacer vers le haut tout en augmentant de diamètre annulaire, dans le but de s'expanser pour venir s'appuyer contre la face intérieure supérieure 13 de la passoire 10 et procurer une étanchéité garantie dans cette position haute, comme il sera expliqué en détail ci-après.

A cet effet, le diamètre du joint annulaire au repos, c'est-à-dire non expansé, est inférieur à celui de la gorge 25 au niveau de sa partie supérieure. Il est par exemple égal ou voisin à celui de la partie inférieure du fond de gorge 25.

Les encoches 15 usinées dans la matière de la paroi latérale intérieure du porte-coupe 7 présentent une conformation technique particulière.

Chaque encoche forme un moyen d'engagement et de retrait par une zone d'entrée 28 à ouverture verticale 29. Celle-ci est suivie d'une gorge 30 fortement inclinée prolongée par un guide faiblement incliné 31. Le guide est terminé par un front d'arrêt latéral 32 constituant le moyen de guidage en rotation lors de l'assemblage-dissociation. Ce front d'arrêt est disposé angulairement sur le porte-coupe 7 de façon à permettre une position prédéterminée, précise et invariable d'arrêt de la poignée.

Les encoches 15 présentent des bords latéraux de contact conformés en rampes obliques destinées à coopérer avec les bases des ergots pour un déplacement par friction.

On distingue ainsi un chemin vertical d'admission 33 suivi d'une rampe inclinée inférieure d'entrée 34 en face d'une rampe inclinée supérieure d'entrée 35 suivie chacune respectivement d'un bord inférieur incliné d'assemblage 36 et d'un bord supérieur de dégagement 37.

Les bords et les rampes ci-dessus constituent des surfaces d'appui et de guidage pour les ergots.

Bien entendu, les ergots et la zone d'entrée sont de dimensions adaptées.

Bien que la variante représentée comporte trois encoches coopérant avec trois ergots, ce nombre ne doit pas être considéré comme limitatif. En effet, une version à quatre ergots conviendrait tout aussi bien. Par ailleurs, la disposition angulaire des encoches et des ergots importe peu.

La passoire et le corps de la coupe sont dissociables bien qu'assemblés mécaniquement entre eux, mais pourraient sur certains modèles être séparés et rendus plus facilement amovibles pour permettre sélectivement de procurer une autre contenance du volume récepteur en café moulu.

On décrira ci-après, en référence aux figures de 10 à 19, les différentes étapes des manoeuvres d'assemblage et de dégagement de la coupe 9 par rapport au porte-coupe 7 qui reste fixe.

Après chargement de la passoire en café moulu, on procède à la mise en place de l'ensemble coupe.

On approche d'abord la coupe 9 de la saillie centrale 5 du distributeur de façon à engager le bord haut de la passoire 10 dans l'espace annulaire d'assemblage 14 délimité par le porte-coupe 7 et la saillie centrale 5 et à présenter les ergots 20 de la coupe aux entrées des encoches 15 du porte-coupe 7.

Le joint annulaire est en position basse (figure 20).

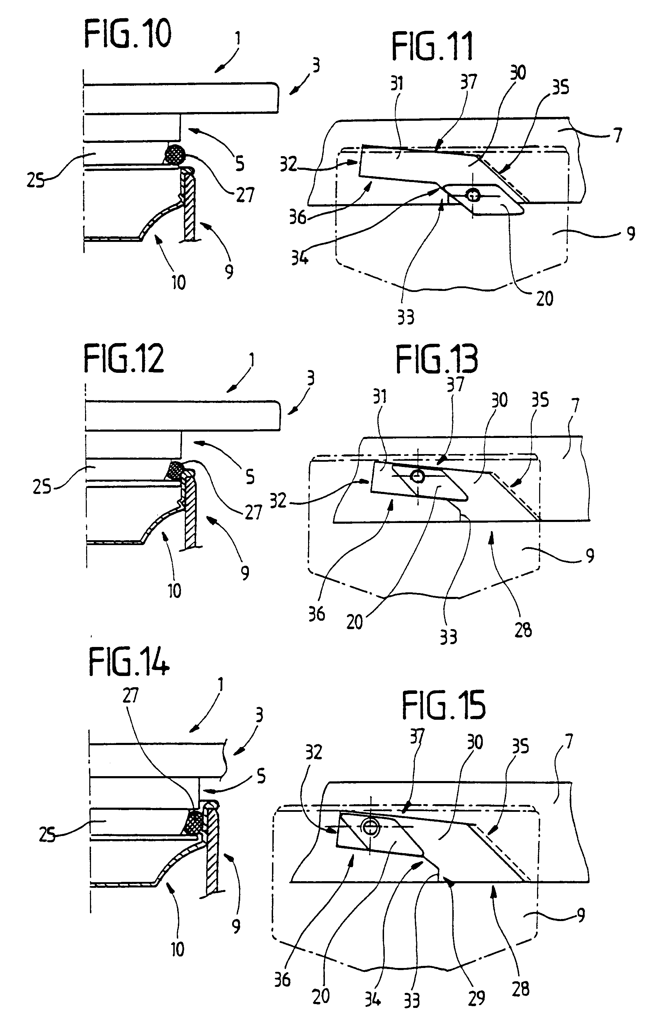

La phase de mise en place commence par l'engagement des ergots 20 dans les entrées des encoches 15. Elle se poursuit par la montée des ergots le long de la zone d'entrée 28 des encoches 15 par contact de chaque base oblique avant 21 avec la rampe inclinée correspondante d'entrée 34 de l'encoche (figures 10 et 11).

Le joint annulaire 27 est toujours en position basse (figure 20).

Ce mouvement d'engagement se poursuit par rotation de la coupe jusqu'à ce que la base inférieure 23 de l'ergot arrive en contact avec le bord inférieur d'assemblage 36 de l'encoche.

Le bord supérieur de la passoire est ou arrive en contact avec le joint.

La rotation de la coupe et la progression de l'ergot le long de ce bord incliné d'assemblage 36 (figures 12 et 13) provoquent la pénétration progressive de la coupe dans l'espace annulaire d'assemblage 14 avec l'engagement du joint 27 dans la partie supérieure de la surface intérieure de la passoire.

Au cours de ces mouvements, c'est la base inférieure 23 de l'ergot qui sert de surface d'appui et de glissement sur les bords inférieurs de l'encoche.

Pendant tout le parcours angulaire le long du bord inférieur d'assemblage, le joint 27 remonte vers le haut de la gorge en raison de la conicité du fond de gorge. Lorsque la pointe supérieure de l'ergot vient en butée contre le front d'arrêt latéral 32 du fond de l'encoche, l'assemblage est terminé (figures 14 et 15) et le joint se trouve en position haute (figure 21).

Lors de la production du café liquide par injection de l'eau chaude sous pression sortant du groupe d'injection dans la passoire, la pression régnant dans celle-ci contribue à appliquer de façon encore plus étanche le joint torique contre la surface adjacente intérieure en regard de la passoire.

En effet, comme on peut le voir sur les schémas explicatifs, la pression de l'eau fait remonter encore plus le joint le long de sa gorge de profil conique. Cette augmentation de son diamètre annulaire dilate le joint qui vient s'appliquer plus fortement contre la paroi latérale intérieure adjacente de la passoire et augmente ainsi la garantie d'étanchéité.

Lorsque l'injection de l'eau chaude est terminée, la pression dans la passoire chute brutalement et on peut dégager la coupe en amorçant son mouvement dans le sens horaire vu de dessous.

Au cours de celui-ci, l'ergot est en contact avec le bord supérieur de dégagement 37 du guide 31 selon un mouvement combiné de rotation-translation vers le bas.

Le mouvement de l'ergot est accéléré ensuite par le guidage en rotation le long de la rampe supérieure d'entrée 35, et on peut réaliser l'extraction rapide et totale de la coupe en dégageant l'ergot de l'encoche (figures de 16 à 19).

On remarquera que la manoeuvre de dégagement de la coupe s'est déroulée en trois phases successives : mouvement hélicoïdal lent (guidage), mouvement hélicoïdal rapide (dégagement), retrait. Pendant cette manoeuvre de dégagement, il s'est également produit une légère rotation du joint torique sur lui-même réalisant automatiquement son décrassement.

Au cours de ce mouvement de dégagement, c'est la base supérieure 24 de l'ergot qui sert de surface d'appui et de glissement sur les bords supérieurs de l'encoche.

Il est bien entendu qu'au-delà des moyens décrits, diverses modifications évidentes et variantes simples entrent dans le cadre de la présente invention.

## Revendications

1. Interface d'étanchéité entre le support amovible appelé coupe (9) supportant la pièce contenant la mouture et la sortie du groupe d'injection formant un distributeur (2) pourvu d'une saillie centrale (5) dans les machines de préparation du café comportant :
. une passoire (10) à fond conformé en grille contenant la mouture du café immobilisée dans le support amovible ou coupe (9) pourvu d'ergots (20) en saillie au niveau de son bord supérieur ;
. un porte-coupe (7) monté solidaire du groupe d'injection de l'eau chaude sous pression et entourant la saillie centrale (5) du distributeur pour délimiter avec celle-ci un espace annulaire d'assemblage (14), le porte-coupe (7) étant pourvu d'encoches (15) adaptées en nombre et en forme pour coopérer avec les ergots (20) de la coupe (9) en vue d'assurer la mise en position de la coupe et du distributeur et la prise mécanique d'assemblage ;
. un joint de forme annulaire (27) monté dans une gorge périphérique annulaire (25) conformée dans la périphérie latérale de la saillie centrale (5) du distributeur, pour réaliser l'étanchéité entre la coupe et la sortie du groupe d'injection de l'eau chaude sous pression,
caractérisée en ce que la gorge périphérique annulaire (25) a un fond conique dont le diamètre annulaire s'élargit vers le haut et une largeur supérieure à la plus grande dimension de section du joint d'étanchéité (27), la partie supérieure (13) de la surface latérale intérieure de la passoire (10) venant se rapprocher puis s'appliquer autour du joint entraîne celui-ci vers le haut depuis une position basse correspondant à une coupe (9) enlevée ou juste engagée jusqu'à une position haute d'étanchéité correspondant à l'assemblage de la coupe avec le porte-coupe, et en ce que les ergots (20) et les encoches (15)de la coupe (9) et du porte-coupe (7) constituent des structures complémentaires d'assemblage-dissociation en deux temps avec butée comprenant un moyen d'engagement et de retrait pour un mouvement de translation ascendant d'engagement vers le joint ou descendant de retrait et un moyen de guidage en assemblage ou en dissociation par rotation de la coupe sur elle-même dans le porte-coupe jusqu'en butée, mouvement d'assemblage au cours duquel le joint, sous l'effet de la montée de la passoire, se déplace d'une position basse de repos jusqu'à une position haute d'étanchéité en augmentant de diamètre annulaire.

2. Interface selon la revendication 1, caractérisée en ce que le joint annulaire (27) est torique à diamètre annulaire plus faible que celui de la gorge (25) au niveau de sa partie supérieure de manière à provoquer l'extension diamétrale du joint consécutive à son déplacement entre sa position basse et sa position haute.

3. Interface selon les revendications 1 et 2, caractérisée en ce que la profondeur de la gorge périphérique annulaire (25) garnie du joint annulaire d'étanchéité (27) est inférieure à la plus grande dimension de section du joint de façon que le joint dépasse de la gorge (25) pour venir porter contre la surface de la partie supérieure en regard de la passoire (10).

4. Interface selon l'une quelconque des revendications précédentes, caractérisée en ce que les ergots (20) affectent chacun une forme générale en losange, disposés légèrement inclinés par rapport au plan supérieur d'ouverture de la coupe et présentent des chants en rampes rectilignes obliques et en ce que les encoches (15) sont conformées dans la matière de la paroi latérale intérieure du porte-coupe (7), de forme technique adaptée pour coopérer avec les ergots (20) afin de réaliser une opération d'assemblage ou de dissociation en deux temps débutant par un mouvement de rapprochement vers le joint suivi d'un mouvement d'entraînement du joint vers le haut par la partie supérieure de la surface latérale de la passoire consécutive à la rotation de la coupe.

5. Interface selon la revendication 4, caractérisée en ce que les moyens d'engagement et de retrait sont pan chaque encoche une zone d'entrée (28) à ouverture verticale (29) suivie d'une gorge (30) fortement inclinée.

6. Interface selon les revendications 4 et 5, caractérisée en ce que les moyens de guidage en assemblage et en dissociation sont pour chaque encoche (15) une prolongation par un guide faiblement incliné (31) terminé par un front d'arrêt latéral (32) disposé angulairement sur le porte-coupe (7) de façon prédéterminée.

7. Interface d'étanchéité selon les revendications 5 et 6, caractérisée en ce que les gorges (30) et les guides (31) des encoches (15) présentent des bords latéraux de contact conformés en rampes obliques destinées à coopérer avec les chants des ergots (20) pour un déplacement par glissement en assemblage ou en dissociation.

8. Interface selon les revendications 5 et 7, caractérisée en ce que chaque gorge (30) est délimitée latéralement par un chemin d'admission (33) suivi d'une rampe inclinée d'entrée (34) faisant face à une rampe inclinée supérieure contre l'une ou l'autre desquelles coulissent l'une ou l'autre face oblique transversale de chaque ergot (20).

9. Interface selon les revendications 6 et 7, caractérisée en ce que le guide faiblement incliné (31) est délimité latéralement par un bord inférieur d'assemblage (36) faisant face à un bord supérieur de dégagement (37) contre l'un ou l'autre desquels coulissent l'une ou l'autre face longitudinale de chaque ergot.

10. Interface selon l'une quelconque des revendications précédentes, caractérisée en ce que le mouvement de rapprochement de la passoire (10) vers le joint (27) dans le premier temps de l'assemblage par engagement simple dans les encoches (15) s'effectue jusqu'à contact avec le joint annulaire (27).

## Claims

1. Sealing interface between the removable support known as a cup (9) supporting the part containing the grindings and the outlet of the injection assembly forming a distributor (2) provided with a central projection (5) in coffee-making machines, comprising:
. a sieve (10) with a base shaped in the form of a grille containing the coffee grindings immobilised in the removable support or cup (9) provided with lugs (20) projecting at its upper edge;
. a cup holder (7) mounted so as to be integral with the assembly for injecting pressurised hot water and surrounding the central projection (5) of the distributor in order to delimit with the latter an annular assembly space (14), the cup holder (7) being provided with notches (15) adapted in terms of number and shape so as to cooperate with the lugs (20) on the cup (9) in order to position the cup and the distributor and to ensure mechanical engagement on assembly;
. an annular seal (27) mounted in an annular peripheral groove (25) shaped in the lateral periphery of the central projection (5) of the distributor in order to bring about the sealing between the cup and the outlet of the assembly for injecting pressurised hot water;
characterised in that the annular peripheral groove (25) has a conical base of which the annular diameter widens upwards and a width which is greater than the largest cross-sectional dimension of the seal (27), the upper part (13) of the internal lateral surface of the sieve (10) which moves towards and then fits about the seal entraining the latter upwards from a lower position corresponding to a cup (9) which has been removed or just engaged to an upper sealing position corresponding to the cup being assembled with the cup holder; and in that the lugs (20) and the notches (15) of the cup (9) and of the cup holder (7) form complementary assembly - separation structures in two stages with abutment comprising a means for engagement and removal for an upward engaging translation movement towards the seal or a downward removal translation movement and a means for guiding during assembly or separation by rotation of the cup on itself in the cup holder until it can turn no further, during which assembly movement the seal, under the effect of the rising of the sieve, moves from a lower rest position into a top sealing position by increasing its annular diameter.

2. Interface according to Claim 1, characterized in that the annular seal (27) is toric and has an annular diameter which is smaller than that of the groove (25) in its upper part so as to cause the diametral extension of the seal following its movement between its lower and upper positions.

3. Interface according to Claims 1 and 2, characterized in that the depth of the annular peripheral groove (25) provided with the annular seal (27) is less than the largest cross-sectional dimension of the seal such that the seal protrudes from the groove (25) in order to bear against the surface of the upper part opposite the sieve (10).

4. Interface according to any one of the preceding claims, characterized in that the lugs (20) each assume a general diamond shape and are disposed slightly inclined relative to the upper opening plane of the cup and have edges in the form of oblique rectilinear slopes; and in that the notches (15) are shaped in the material of the internal lateral wall of the cup holder (7), with a technical shape adapted so as to cooperate with the lugs (20) in order to perform an assembly or separation operation in two stages starting with an approach movement towards the seal followed by a movement which entrains the seal upwards by means of the upper part of the lateral surface of the sieve when the cup has been rotated.

5. Interface according to Claim 4, characterized in that for each notch the engagement and removal means are an inlet area (28) with a vertical opening (29) followed by a greatly inclined groove (30).

6. Interface according to Claims 4 and 5, characterized in that for each notch (15) the guiding means for assembly and separation are an extension by means of a slightly inclined guiding member (31) terminating in a lateral stop front (32) disposed at an angle on the cup holder (7) in a predetermined manner.

7. Sealing interface according to Claims 5 and 6, characterized in that the grooves (30) and the guiding members (31) of the notches (15) have lateral contact edges shaped in the form of oblique slopes for cooperating with the edges of the lugs (20) for a sliding movement on assembly or separation.

8. Interface according to Claims 5 and 7, characterized in that each groove (30) is delimited laterally by an inlet path (33) followed by an inclined inlet slope (34) opposite an upper inclined slope against one or other of which one or other transverse oblique face of each lug (20) slides.

9. Interface according to Claims 6 and 7, characterized in that the slightly inclined guiding member (31) is delimited laterally by a lower assembly edge (36) opposite an upper disengagement edge (37) against one or other of which one or other longitudinal face of each lug slides.

10. Interface according to any one of the preceding claims, characterized in that the approach movement of the sieve (10) towards the seal (27) in the first stage of assembly by simple engagement in the notches (15) is performed until contact is made with the annular seal (27).

## Patentansprüche

1. Dichtungsanordnung an Kaffeemaschinen zwischen dem als Becher bezeichneten abnehmbaren Träger (9), der das das Mahlgut enthaltende Teil trägt, und dem Auslaß der Einspritzgruppe, die einen mit einem mittigen Vorsprung (5) versehenen Verteiler (2) bildet mit
- einem das Kaffee-Mahlgut enthaltenden Sieb (10) mit einem gitterförmigen Boden, welcher in dem in Höhe seines oberen Randes mit vorspringender Nase (20) versehenen, abnehmbaren Träger oder Becher (9) aufgenommen ist;
- einem Becherhalter (7), welcher mit der Einspritzgruppe für unter Druck stehendes Heißwasser fest verbunden ist und den Zentralvorsprung (5) des Verteilers umgibt, um mit diesem einen ringförmigen Anschlußraum (14) zu bilden, wobei der Becherhalter (7) mit bezüglich Anzahl und Form passenden Aussparungen (15) versehen ist, welche mit den Nasen (20) des Bechers (9) zusammenwirken, um das Positionieren von Becher und Verteiler und das mechanische Verbinden zu gewährleisten;
- einer in einer ringförmigen Umfangsnut (25), welche an der seitlichen Peripherie des Zentralvorsprungs (5) des Verteilers ausgebildet ist, festgelegten Ringdichtung (27), um die Abdichtung zwischen dem Becher und dem Auslaß der Einspritzgruppe für das unter Druck stehende Heißwasser zu realisieren,
dadurch gekennzeichnet,
daß die ringförmige Umfangsnut (25) einen konischen Boden aufweist, dessen Ringdurchmesser sich nach oben vergrößert und breiter als der größte Querschnitt der Ringdichtung (27) ist, wobei der obere Teil (13) der inneren Seitenfläche des Siebes (10) nach dem Annähern und anschließenden Anlegen an die Dichtung diese aus einer unteren Stellung bei entnommenem oder gerade eingesetztem Becher (9) in eine obere Abdichtungsstellung beim Zusammenfügen von Becher und Becherhalter nach oben mitnimmt, und daß die Nasen (20) und die Aussparungen (15) des Bechers (9) und des Becherhalters (7) komplementäre Verbindungs-Trenn-Strukturen mit zwei Anschlagstufen bilden, welche eine Einrichtung zum Eingreifen und zum Freisetzen bei ansteigender Translationsbewegung in Richtung der Dichtung zum Eingreifen oder bei abwärts führender Translationsbewegung zum Freisetzen und eine Führungseinrichtung zum Verbinden oder zum Lösen durch Drehen des Bechers im Becherhalter um sich selbst bis auf Anschlag aufweisen, wobei die Dichtung sich im Verlaufe der Verbindungsbewegung unter der Wirkung des aufsteigenden Siebes aus einer unteren Ruhestellung in eine obere Abdichtungsstellung unter Vergrößerung ihres Ringdurchmessers verlagert.

2. Anordnung nach Anspruch 1, dadurch gekennzeichnet, daß die Ringdichtung (27) torusförmig mit einem Ringdurchmesser ausgebildet ist, der etwas kleiner als derjenige der Nut (25) in Höhe ihres oberen Abschnittes ist, um die Dichtung bei ihrer Verlagerung zwischen ihrer unteren Stellung und ihrer oberen Stellung im Durchmesser aufzuweiten.

3. Anordnung nach Anspruch 1 und 2, dadurch gekennzeichnet, daß die Tiefe der mit der Ringdichtung (27) versehenen ringförmigen Nut (25) geringer als der größte Querschnitt der Dichtung ist, damit die Dichtung die Nut (25) überragt, um an der gegenüberliegenden Oberfläche des oberen Abschnittes des Siebs (10) zur Wirkung zu kommen.

4. Anordnung nach einem der vorangehenden Ansprüche, dadurch gekennzeichnet, daß die Nasen (20) jeweils eine im wesentlichen rhombische Form aufweisen und gegenüber der oberen Öffnungsebene des Bechers leicht geneigt angeordnet sind und Kanten in Form rechteckiger, geneigter Rampen aufweisen und daß die Aussparungen (15) an der Innenseitenwand des Becherhalters (7) in passender Form ausgearbeitet sind, um mit den Nasen (20) zum Verbinden oder Lösen in zwei Stufen zusammenzuwirken, beginnend mit einer Annäherungsbewegung an die Dichtung, auf die eine Mitnahmebewegung der Dichtung nach oben mittels des oberen Abschnittes der Seitenfläche des Siebs bei Drehung des Bechers folgt.

5. Anordnung nach Anspruch 4, dadurch gekennzeichnet, daß die Einrichtungen zum Eingreifen und Freisetzen an jeder Aussparung eine Eintrittszone (28) mit vertikaler Öffnung (29), gefolgt von einem steil geneigten Einschnitt (30) darstellen.

6. Anordnung nach Anspruch 4 und 5, dadurch gekennzeichnet, daß die Führungseinrichtungen zum Verbinden und Lösen an jeder Aussparung (15) eine Verlängerung mit einer flach geneigten Führung (31) darstellen, welche an einem seitlichen Stirnanschlag (32) endet, der am Becherhalter (7) unter einem festgelegten Winkel angeordnet ist.

7. Anordnung nach Anspruch 5 und 6, dadurch gekennzeichnet, daß die Einschnitte (30) und Führungen (31) an den Aussparungen (15) als geneigte Rampen ausgebildete Seitenkanten aufweisen, welche mit den Schmalseiten der Nasen (20) zur Gleitverlagerung beim Verbinden oder Lösen zusammenwirken.

8. Anordnung nach Anspruch 5 und 7, dadurch gekennzeichnet, daß jeder Einschnitt (30) seitlich durch eine Einführung (33) begrenzt ist, der eine geneigte Eintrittsrampe (34) gegenüber einer geneigten oberen Rampe folgt, wobei die eine oder andere geneigte Querseite jeder Nase (20) an der einen oder anderen Rampe gleitet.

9. Anordnung nach Anspruch 6 und 7, dadurch gekennzeichnet, daß die flach geneigte Führung (31) seitlich durch einen unteren Rand (36) für das Eingreifen gegenüber einem oberen Rand (37) zur Freigabe begrenzt ist, wobei die eine oder andere Längsseite jeder Nase an dem einen oder anderen Rand gleitet.

10. Anordnung nach einem der vorangehenden Ansprüche, dadurch gekennzeichnet, daß die Annäherungsbewegung des Siebes (10) an die Dichtung (27) in der ersten Stufe der Verbindung durch einfaches Einsetzen in die Aussparungen (15) bis zum Kontakt mit der Ringdichtung (27) erfolgt.
